# NEUE EUROPÄISCHE PATENTSCHRIFT

(11) **EP 2 762 016 B2**
(45) Veröffentlichungstag und Bekanntmachung des Hinweises auf die Entscheidung über den Einspruch: **21.06.2023**
(45) Hinweis auf die Patenterteilung: 19.09.2018
(21) Anmeldenummer: 14151368.9
(22) Anmeldetag: 16.01.2014
(51) Int. Cl.: A24C 5/34, G01N 22/04, A24D 3/02

(54) **Messvorrichtung, Maschine und Verfahren der Tabak verarbeitenden Industrie**
Measuring device, machine and method for the tobacco processing industry
Dispositif de mesure, machine et procédé de l'industrie de traitement du tabac

(30) Priorität: 30.01.2013 DE 102013201512
(43) Veröffentlichungstag der Anmeldung: 06.08.2014
(73) Patentinhaber: Körber Technologies GmbH, 21033 Hamburg (DE)
(72) Erfinder: Kirchenstein, Robert, 22043 Hamburg (DE); Leifels, Tobias, 20535 Hamburg (DE)
(74) Vertreter: Seemann & Partner Patentanwälte mbB

(56) Entgegenhaltungen:
- CH-A5- 604 163
- DE-A1-102011 006 416
- DE-U1-202005 010 375
- DE-U1-202005 010 375
- DE-U1-202007 018 481
- US-A- 5 397 993
- US-A1- 2011 162 665
- Boris Tsentsiper: "APPLICATION OF OPEN COAXIAL RESONATOR AS SENSOR FOR MICROWAVE MOISTURE METER", 3rd Workshop on Electromagnetic wave interaction with water and moist substances, pages 156-160,
- J R Dizon: "A combined near-field scanning microwave microscope and transport measurement system for characterizing dissipation in conducting and high-Tc superconducting films at variable temperatures", PhD thesis, University of Kansas, 2006

## Beschreibung

Die Erfindung betrifft eine Messvorrichtung zur Überprüfung wenigstens eines längsaxial geförderten stabförmigen Artikels oder Materialstrangs der Tabak verarbeitenden Industrie zur Überprüfung einer Position wenigstens eines in den Artikel oder den Materialstrang eingelegten Objekts, insbesondere einer flüssigkeitsgefüllten Kapsel, mittels wenigstens eines Mikrowellenmessfeldes, eine Verwendung sowie eine Maschine der Tabak verarbeitenden Industrie. Die Erfindung betrifft weiter ein Verfahren zur Überprüfung wenigstens eines längsaxial geförderten stabförmigen Artikels oder Materialstrangs der Tabak verarbeitenden Industrie, in den wenigstens ein Objekt, insbesondere eine flüssigkeitsgefüllte Kapsel, eingelegt ist, mittels wenigstens eines Mikrowellenmessfeldes.

Die Erfindung betrifft somit die Herstellung eines objektbefüllten Filterstrangs für stabförmige Artikel der Tabak verarbeitenden Industrie, insbesondere für Filterzigaretten. Der Filterstrang wird nach seiner Herstellung in einzelne Filterstäbe abgelängt. Der Filterstrang bzw. die abgelängten Filterstäbe enthalten als wesentlichen Bestandteil ein oder mehrere Objekte, die die Rauch- oder Filtereigenschaften beeinflussen.

Bei den Objekten handelt es sich insbesondere um Kapseln mit einer festen Hülle, die mit einer Flüssigkeit gefüllt sind. Die Flüssigkeit enthält in solchen Fällen üblicherweise Geschmacksstoffe oder Duftstoffe, beispielsweise Menthol. Zur Verwendung bricht ein Raucher die Kapsel vor dem Rauchen durch Druck auf den Filter auf und zündet die Zigarette anschließend an. Durch den Druck auf die Kapsel im Filter wird die Flüssigkeit freigesetzt, so dass sich das Aroma der Flüssigkeit entfaltet. Diese Vorgehensweise bietet ein besonders intensives oder frisches Geschmackserlebnis. Entsprechende Kapseln weisen üblicherweise einen Durchmesser von ca. 3,5 mm auf, können aber auch kleiner oder größer sein.

In der US 2011/162665 A1 ist ein Verfahren und eine Vorrichtung zur Erkennung verschiedener Objekte in filterstabförmigen Artikeln der Tabak verarbeitenden Industrie bekannt. Die offenbarte Vorrichtung umfasst einen oder mehrere Sensoren, die die Zusammensetzung von Stabsegmenten feststellen, sowie einen Prozessor, der die Signale von dem Sensor oder den Sensoren empfängt und einen Vergleich anstellt zwischen den Signalen und bekannten Daten. Artikel, welche vorgegebene Spezifikationen nicht erfüllen, werden ausgeworfen.

Aus EP 2 243 385 A2 ist ein Verfahren zur Kapselüberwachung und Kapselpositionsregelung in Filtern der Tabak verarbeitenden Industrie bekannt, bei der flüssigkeitsgefüllte Kapseln in einen Filterstrang eingelegt werden und ein Mikrowellenmessverfahren zur Qualitätsüberwachung einer Mehrzahl von Filtern oder eines Filterstrangs der Tabak verarbeitenden Industrie, in die oder in den Kapseln mit flüssiger Füllung eingebracht sind, zur Qualitätsüberwachung bezüglich der Anzahl, dem Füllungszustand und der längsaxialen Position der Kapseln im Filterstrang verwendet wird. Dabei wird ein Mikrowellenresonator verwendet, der in DE 198 54 550 B4 beschrieben ist und das dort genannte Resonatorgehäuse aufweist, also ein zylindrisches Resonatorgehäuse, durch das der Filterstrang zentral durchgeführt wird. Der Offenbarungsgehalt von EP 2 243 385 A2 und DE 198 54 550 B4 wird in das vorliegende Schutzrecht durch Bezugnahme vollinhaltlich aufgenommen.

Demgegenüber liegt der vorliegenden Erfindung die Aufgabe zugrunde, eine Messvorrichtung und ein Verfahren zur Verfügung zu stellen, mit denen eine weiter verbesserte Überprüfung von objektbeladenen Filtersträngen oder stabförmigen Artikeln der Tabak verarbeitenden Industrie möglich ist.

Diese Aufgabe wird durch eine Messvorrichtung zur Überprüfung wenigstens eines längsaxial geförderten stabförmigen Artikels oder Materialstrangs der Tabak verarbeitenden Industrie gelöst, insbesondere zur Überprüfung einer Position wenigstens eines in den Artikel oder den Materialstrang eingelegten Objekts, insbesondere einer flüssigkeitsgefüllten Kapsel, mittels wenigstens eines Mikrowellenmessfeldes, das dadurch weitergebildet ist, dass wenigstens zwei, insbesondere wenigstens drei, Mikrowellenresonatoren mit seitlichen Öffnungen an in Umfangsrichtung des Artikels oder Materialstrangs unterschiedlichen Positionen um den Artikel oder den Materialstrang herum angeordnet sind und den Artikel oder Materialstrang jeweils von einer Seite mit einem Mikrowellenmessfeld beaufschlagen, wobei die wenigstens zwei Mikrowellenresonatoren als offene Koaxialresonatoren ausgebildet sind, wobei die offene Seite des Koaxialresonators zum Artikel oder Materialstrang hin ausgerichtet ist, wobei eine mit den Mikrowellenresonatoren verbundene Leistungselektronik ausgebildet ist, die Mikrowellenresonatoren mit unterschiedlichen Mikrowellenmessfrequenzen zu beaufschlagen.

Damit wird die Problematik gelöst, dass bei Zigarettenstrangmaschinen oder Filterstrangmaschinen mit Objekt- oder Kapseleinlegevorrichtungen sich die Objekte bzw. Kapseln verfahrensbedingt nicht immer mittig im Querschnitt des Materialstrangs einlegen lassen, so dass diese in einigen Fällen in Richtung des Randes des Filterstrangs eingebettet werden. In extremen Fällen befindet sich dann im Falle eines Filterstrangs überhaupt kein Acetat mehr zwischen Kapsel und Filterpapier. Die Kapsel ist dann direkt unter dem Filterpapier sichtbar und fühlbar. Diese ungewollte Verlagerung bewirkt, dass Kapseln in späteren Verfahrensschritten häufiger beschädigt werden und auslaufen, da sie nicht von allen Seiten gleichmäßig durch das Filtermaterial geschützt und daher empfindlicher gegenüber Krafteinflüssen sind, wie sie zum Beispiel in Logistikkomponenten, auf den Trommeln einer Filteransetzmaschine oder während des Verpackens auftreten. Soweit die Erfindung nachfolgend am Beispiel eines mit Objekten belegten Filterstrangs erläutert wird, gelten die Ausführungen entsprechend auch für mit Objekten belegte umhüllte Tabakstränge und Zigarettenstränge.

Zusätzlich ist das zentrische Platzieren mit qualitativen Anforderungen an die Zigarette verbunden. So ist es notwendig, damit sich die Flüssigkeit der Kapseln bei allen Filtern gleich verteilt und sich das Brechen der Kapsel bei allen Zigaretten gleich anfühlt. Diese exzentrische Anordnung war mit den bisher verwendeten Mikrowellenmessvorrichtungen gemäß DE 198 54 550 B4 und EP 2 243 385 A2 nicht feststellbar.

Demgegenüber wird erfindungsgemäß nunmehr eine seitliche Beaufschlagung des längsaxial geförderten Strangs bzw. Artikels vorschlagen. Bei einer seitlichen, also radialen, Beaufschlagung ist die Stärke jedes einzelnen Mikrowellenfeldes in radialer Richtung des Strangs bzw. Artikels stark anisotrop, so dass eine exzentrische Anordnung der Objekte, beispielsweise Kapseln, sich in einer asymmetrischen Signalantwort bezüglich der unterschiedlich platzierten seitlichen Mikrowellenresonatoren äußert. Diese lässt sich zur Positionsbestimmung und zum Ausschluss von nicht regelkonformen Artikeln bzw. Filterstrangabschnitten oder umhüllten Tabakstrangabschnitten verwenden.

Die Messvorrichtung umfasst wenigstens zwei Mikrowellenresonatoren, die als offene Koaxialresonatoren ausgebildet sind. Diese sogenannten "Open Coaxial Surface Wave" Mikrowellenresonatoren sind zylindrisch aufgebaut mit einem zentralen Leiter. Über ein oder zwei Einkopplungsgeometrien, beispielsweise Antennen oder Lochplatten, wird magnetisch oder elektrisch das Mikrowellenfeld im Resonatorraum eingekoppelt. Eine Endfläche ist geschlossen, die Endfläche an der gegenüberliegenden Seite des Resonators ist offen. Aus der offenen Seite dringt ein Mikrowellenfeld nach außen, das mit zunehmender Entfernung stark nachlässt, also stark anisotrop ist. Die Signalantwort auf eine vorbeigeförderte Kapsel ist dabei einerseits stark vom Füllungszustand der Kapsel mit einem mikrowellenabsorbierenden Medium, beispielsweise einer wässrigen Geschmacksstofflösung, und andererseits vom Abstand der Kapsel von der offenen Endfläche, abhängig. Damit eignen sich Koaxialresonatoren besonders gut für den erfindungsgemäßen Einsatz.

In einer bevorzugten Ausgestaltung sind drei Mikrowellenresonatoren in einer gleichwinkligen, insbesondere sternförmigen, Anordnung um den Artikel oder Materialstrang herum angeordnet. Diese einfache geometrische Anordnung erlaubt eine sichere und schnelle Positionsbestimmung, zusätzlich zu einer Füllstandsinformation für die Kapseln, die die Resonatorantwort als sogenannte "High-Loss"-Objekte maßgeblich bestimmen.

Alternativ sind zwei Mikrowellenresonatoren vorgesehen, die um den Materialstrang, insbesondere Filterstrang oder Tabakstrang, herum angeordnet sind, insbesondere im Wesentlichen in einer Ebene quer zur Förderrichtung des Materialstrangs in einem Winkel von 60° bis 300° zueinander, insbesondere 180°. Im Falle des Winkels von 180° liegen sich die Mikrowellenresonatoren direkt gegenüber. Diese Anordnungen mit zwei Mikrowellenresonatoren kommen vorteilhaft zur Anwendung im Fall von Platz-, Raum- und/oder Kostenrestriktionen, wobei der Verlust an Information gegenüber Anordnungen mit drei oder mehr Mikrowellenresonatoren zu etwas weniger genauen Messergebnissen führen kann, insbesondere in Bezug auf die Erkennung der Kapselposition.

Erfindungsgemäß werden die wenigstens zwei Mikrowellenresonatoren mit unterschiedlichen Frequenzen betrieben. Vorzugsweise werden die Mikrowellenresonatoren mit Mikrowellenmessfrequenzen zwischen 1 GHz und 10 GHz, insbesondere zwischen 4 GHz und 7 GHz, beaufschlagt.

Besonders für den Fall unterschiedlicher Messfrequenzen für die verschiedenen Mikrowellenresonatoren ist vorteilhafterweise vorgesehen, dass die Mikrowellenresonatoren, insbesondere offene Koaxialresonatoren, für verschiedene Mikrowellenmessfrequenzen unterschiedliche Längen und/oder Formen bei gleichem Durchmesser aufweisen. Die Längen und/oder Formen sind an die gewünschten Messfrequenzen angepasst, während der gleich gewählte Durchmesser sicherstellt, dass die Geometrie des aus dem jeweiligen Mikrowellenresonator seitlich austretenden Mikrowellenmessfeldes zumindest annähernd gleich ist, um eine geometrisch in Bezug auf die Interaktion von Objekt mit Mikrowellenmessfeld gleichartige Messung zu gewährleisten. Bei verschiedenen Frequenzen ändert sich die Eindringtiefe eines Mikrowellenfeldes, so dass Mikrowellenmessfelder unterschiedlicher Frequenzen unter Materialbeladung nicht identisch, aber annähernd gleich sein werden.

Um zu gewährleisten, dass sich der Abstand zwischen dem Filterstrang oder den stabförmigen Artikeln und den Mikrowellenresonatoren im Laufe einer Produktion nicht ändert und somit systematische Abweichungen in den Messungen auftreten, ist vorzugsweise vorgesehen, dass eine Führungsvorrichtung zur Führung des Artikels oder des Materialstrangs im Bereich der Mikrowellenresonatoren vorgesehen ist, mittels der ein Abstand zwischen dem Artikel oder Materialstrang und den Öffnungen der Mikrowellenresonatoren vorgebbar ist. Eine solche Führungsvorrichtung kann beispielsweise ein Kunststoffrohr aus einem für Mikrowellen im Wesentlichen transparenten Material sein, beispielsweise PEEK (Polyetheretherketon).

Für verschiedene Formate können auch verschiedene Führungsvorrichtungen vorgesehen sein. So kann beispielsweise der Innendurchmesser eines Führungsrohrs zur Adaption eines neuen Filterstrangformats angepasst sein, während der Außendurchmesser konstant bleibt, um die Anordnung der Mikrowellenresonatoren fix zu halten. Alternativ können auch die Mikrowellenresonatoren in radialer Richtung beweglich, insbesondere miteinander gekoppelt, angebracht sein, so dass auf eine Verkleinerung oder Vergrößerung des Durchmessers beim Übergang von einem Filterstrangformat auf ein anderes durch Austausch des Führungsrohrs und Zusammenrücken oder Auseinanderrücken der Mikrowellenresonatoren reagiert werden kann.

Die der Erfindung zugrunde liegende Aufgabe wird auch durch eine Verwendung einer erfindungsgemäßen, zuvor beschriebenen Messvorrichtung zur Überprüfung wenigstens eines längsaxial geförderten stabförmigen Artikels oder Materialstrangs der Tabak verarbeitenden Industrie zur Überprüfung einer Position wenigstens eines in den Artikel oder den Materialstrang eingelegten Objekts gelöst, insbesondere einer flüssigkeitsgefüllten Kapsel, insbesondere einer transversalen Position des Objekts im Artikel oder Materialstrang und/oder eines radialen Abstands des Objekts von einem Mittelpunkt und/oder von einem Rand des Artikels oder Materialstrangs. Dabei sind im Rahmen der vorliegenden Erfindung unter einem Materialstrang alle Materialstränge der Tabak verarbeitenden Industrie zu verstehen, unter anderem Zigarettenstränge, umhüllte Tabakstränge, Monoacetat, Kammer- und Multisegmentfilterstränge.

Ebenfalls wird die der Erfindung zugrunde liegende Aufgabe durch eine Maschine der Tabak verarbeitenden Industrie, insbesondere Filterstrangmaschine oder Zigarettenstrangmaschine, mit wenigstens einer erfindungsgemäßen, zuvor beschriebenen Messvorrichtung zur Überprüfung von längsaxial geförderten Artikeln oder ein oder zwei Materialsträngen, insbesondere Filtersträngen oder umhüllten Tabaksträngen oder Zigarettensträngen, gelöst.

Schließlich wird diese Aufgabe durch ein Verfahren zur Überprüfung wenigstens eines längsaxial geförderten stabförmigen Artikels oder Materialstrangs der Tabak verarbeitenden Industrie, in den wenigstens ein Objekt, insbesondere eine flüssigkeitsgefüllte Kapsel, eingelegt ist, mittels wenigstens eines Mikrowellenmessfeldes, gelöst, in einer erfindungsgemäßen, zuvor beschriebenen Messvorrichtung, das dadurch weitergebildet ist, dass der Artikel oder der Materialstrang während einer längsaxialen Förderung von drei in Umfangsrichtung unterschiedlichen Seiten mit jeweils einem von einer Seite radial eindringenden Mikrowellenmessfeld aus jeweils wenigstens einem seitlich offenen Mikrowellenresonator beaufschlagt wird, wobei aus den aus der Anwesenheit eines in den Artikel oder Materialstrang eingelegten Objekts resultierenden Änderungen der jeweiligen Messsignale der drei Mikrowellenresonatoren wenigstens eine Eigenschaft des Objekts ermittelt wird, wobei die drei Mikrowellenresonatoren als offene Koaxialresonatoren ausgebildet sind, wobei die offene Seite des Koaxialresonators zum Artikel oder Materialstrang hin ausgerichtet ist, wobei eine ermittelte Eigenschaft eine transversale Position des Objekts im Artikel oder Materialstrang und/oder ein radialer Abstand des Objekts von einem Mittelpunkt und/oder von einem Rand des Artikels oder Materialstrangs ist. Alternativ oder zusätzlich dazu ist vorteilhafterweise eine ermittelte Eigenschaft eine längsaxiale Position des Objekts im Artikel oder Materialstrang.

Damit wird bei dem erfindungsgemäßen Verfahren die Aufgabe mit gleichartigen Mitteln gelöst wie bei der erfindungsgemäßen Messvorrichtung.

Schließlich ist es alternativ oder zusätzlich vorteilhaft, wenn eine ermittelte Eigenschaft eine Füllmenge, ein Füllungsgrad, ein Beschädigungszustand und/oder ein Fehlen eines Objekts ist oder ein Überschuss an eingelegten Objekten an einer längsaxialen Position im Artikel oder Materialstrang.

Die Ermittlung erfolgt bevorzugt und besonders einfach mittels einer Triangulation und/oder einer Look-Up-Tabelle, die insbesondere simulativ oder empirisch bestimmt ist oder wird. Eine Look-Up-Tabelle enthält vorbestimmte oder vorberechnete Werte zu den zu ermittelnden Größen in Abhängigkeit der direkten Messgrößen. Es handelt sich somit um eine mehrdimensionale Tabelle mit Werte-Tupeln. Die Triangulation verwendet die relativen Unterschiede zwischen den Messsignalen der Mikrowellenresonatoren, um den Abstand des Objekts von den jeweiligen Mikrowellenresonatoren zu ermitteln. Anschließend wird anhand der bekannten Positionen der Mikrowellenresonatoren und der jeweiligen dazu ermittelten Abstände der Schnittpunkt der Kreise bestimmt, die dem jeweiligen Abstand von der seitlichen Öffnung des jeweiligen Mikrowellenresonators entsprechen. Die so triangulierte Position entspricht der transversalen bzw. exzentrischen Position des Objekts bzw. der Kapsel im Materialstrang oder beispielsweise in einem Filterstrang oder einem umhüllten Tabakstrang im stabförmigen Artikel, beispielsweise Filterstab oder Filterzigarette.

In einer bevorzugten Weiterbildung wird ein Artikel oder ein Abschnitt des Materialstrangs, der ein Objekt enthält, das wenigstens einen vorbestimmten oder vorbestimmbaren Grenzwert für die wenigstens eine ermittelte Eigenschaft nicht einhält, von der weiteren Verarbeitung ausgeschlossen und/oder aus dem Herstellungsprozess ausgeschleust. Dies erfolgt insbesondere durch Ausblasen.

Das erfindungsgemäße Verfahren wird vorzugsweise in einem selbstlernenden System eingesetzt, wobei Grenzwerte für ordnungsgemäße Füllobjekte, beispielsweise Kapseln, für jede Produktion angepasst werden. So können vorzugsweise anhand beispielsweise der ersten 10 bis 50 Kapseln im Strang oder in Artikeln zunächst erste Bereiche für Grenzwerte festgelegt werden und anschließend ein laufendes Mittel über beispielsweise 500 bis 1000 Objekte im Materialstrang bzw. in Artikeln verwendet werden, um die Grenzwerte laufend anzupassen. Damit kann normalen Variationen in der Produktion Rechnung getragen werden, ohne die Fähigkeit einzubüßen, tatsächlich fehlerhafte oder fehlerhaft positionierte Objekte zu erkennen und entsprechende Strangabschnitte oder Filterstäbe zu entfernen. Auch die Kalibrierung der Messung bzw. der Messvorrichtungen kann entsprechend selbstlernend ausgestaltet sein.

Die zu den einzelnen Erfindungsgegenständen, also der Messvorrichtung, der Maschine, der Verwendung und dem Verfahren, genannten Merkmale, Vorteile und Eigenschaften gelten ohne Einschränkung auch für die aufeinander bezogenen anderen Erfindungsgegenstände, die den gleichen Erfindungsgedanken mit gleichartigen, einander entsprechenden Mitteln verwirklichen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Teils einer bekannten Filterstrangmaschine,
- Fig. 2: eine schematische Darstellung eines Teils einer weiteren bekannten Filterstrangmaschine,
- Fig. 3: eine schematische dreidimensionale Darstellung eines Teils einer weiteren bekannten Filterstrangmaschine,
- Fig. 4: eine perspektivische Darstellung einer bekannten Messanordnung,
- Fig. 5a), b): schematische Darstellungen einer Anordnung eines Objekts in einem stabförmigen Artikel,
- Fig. 6a), b): schematische Darstellungen eines bekannten Mikrowellenresonatorfelds,
- Fig. 7: eine schematische Darstellung eines offenen Koaxialresonators mit einem objektbeladenen stabförmigen Artikel,
- Fig. 8: ein Resonanzkurven-Diagramm,
- Fig. 9: einen typischen Signalverlauf,
- Fig. 10: eine Querschnittsdarstellung durch eine erfindungsgemäße Messanordnung und
- Fig. 11: eine diagrammatische Darstellung einer Objektpositionsbestimmung.

In den Zeichnungen sind jeweils gleiche oder gleichartige Elemente und/oder Teile mit denselben Bezugsziffern versehen, so dass von einer erneuten Vorstellung jeweils abgesehen wird.

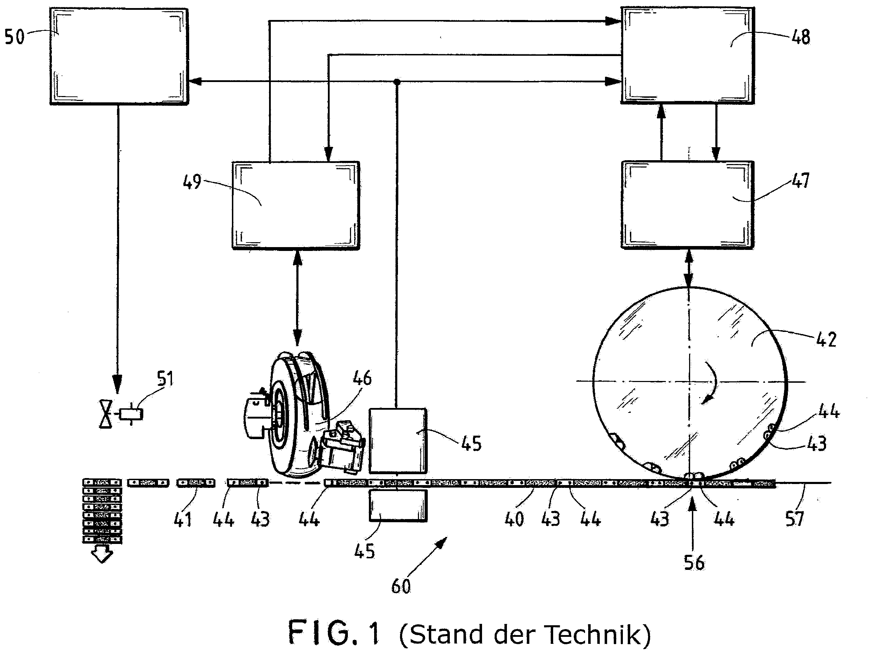

Fig. 1 zeigt schematisch einen Teil einer Filterstrangmaschine, wie sie beispielsweise aus EP 2 243 385 A2 bekannt ist. Ein Filterstrang 40 wird entlang der Längsachse 57, also längsaxial, in Fig. 1 von rechts nach links gefördert. Im Filterstrang 40 werden mittels eines Einlegerads 42 zwei Kapseln 43 und 44 jeweils in im Wesentlichen äquidistanten Abständen zu zwei weiteren Kapseln 43 und 44 in den Filterstrang eingebracht bzw. eingelegt. Der Filterstrang 40 weist dann nebeneinanderliegende Kapseln 43 und 44 auf, zwischen denen auch noch etwas Filtertow angeordnet sein kann.

Der mit den Kapseln 43 und 44 befüllte Filterstrang 40 durchläuft dann einen Mikrowellenresonator 45, in dem unter anderem die Qualität des Filterstrangs und die Befüllung mit Kapseln 43 und 44 überprüft wird. Die Form des Mikrowellenresonators ist aus DE 198 54 550 B4 beispielsweise bekannt, worauf an dieser Stelle ausdrücklich Bezug genommen wird. Außerdem dient der Mikrowellenresonator 45 zur längsaxialen Positionsbestimmung der Kapseln 43 und 44. Schließlich schneidet eine Schneidvorrichtung 46, die hier als rotierender Messerträger ausgebildet ist, den Strang 40 in doppeltlange Filter 41. Sollte in dem Mikrowellenresonator 45 festgestellt werden, dass die Qualität der hergestellten Filterstäbe doppelter Gebrauchslänge 41 nicht in Ordnung ist, werden diese durch eine Ausblasvorrichtung 51 ausgeblasen.

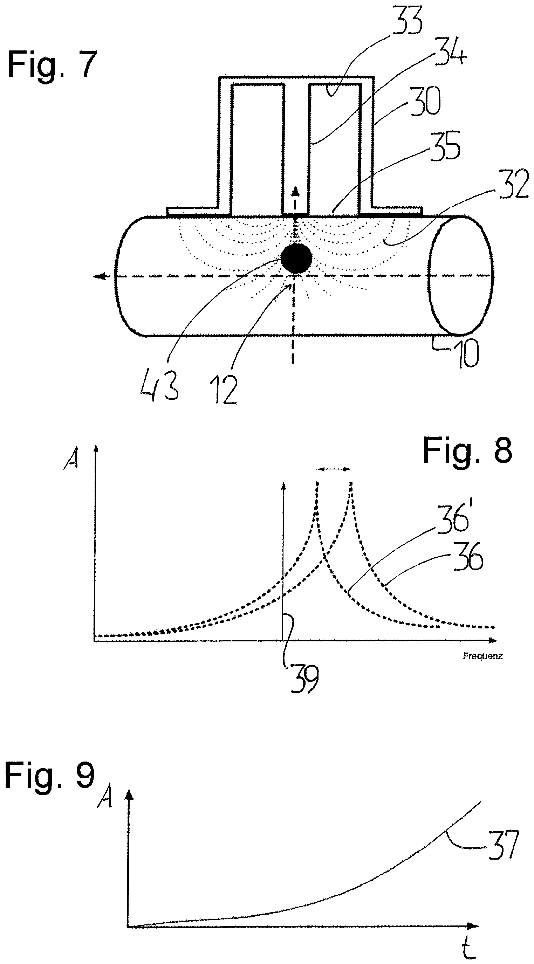

Die Steuerung und Regelung der entsprechenden Komponenten der Filterstrangmaschine 60 wird im Folgenden dargestellt:
Die Drehgeschwindigkeit des Einlegerads 42 wird durch ein lagegeregeltes Antriebssystem 47 gesteuert. Dieses gibt ein entsprechendes Steuersignal an das Einlegerad bzw. den Aktuator des Einlegerads 42 ab. Die jeweilige Drehposition des Einlegerads wird als längsaxiale Istposition dem Antriebssystem 47 zurückgeführt, das einen Lageistwert einer Lageregelung 48 zur Verfügung stellt. Die Lageregelung 48 gibt einen Lagesollwert an das Antriebssystem 47 ab. Dieses ist durch die entsprechenden Striche mit Pfeilen, die die jeweiligen Komponenten in Fig. 8 verbinden, angedeutet.

Ferner gibt der Mikrowellenresonator 45 eine längsaxiale Istposition der in den Strang 40 eingelegten Kapseln 43 und 44 sowohl an die Lageregelung 48 als auch an ein Qualitätsüberwachungs- und Statistiksystem 50 weiter. Bei falscher Lage dient das Qualitätsüberwachungs- und Statistiksystem dazu, ein Auswurfsignal zur Ausblasvorrichtung 51 abzugeben, so dass entsprechende Filterstäbe 41 mit falsch positionierten Kapseln 43 bzw. 44 ausgeblasen werden.

Außerdem gibt die Lageregelung 48 einen Lagesollwert an ein lagegeregeltes Antriebssystem 47 für das Einlegerad 42 ab. Der Lageistwert wird vom Antriebssystem 49 an die Lageregelung 48 zurückgeführt. Der Messerträger bzw. der Aktuator des Messerträgers 46 ist mit dem Antriebssystem 47 entsprechend verbunden.

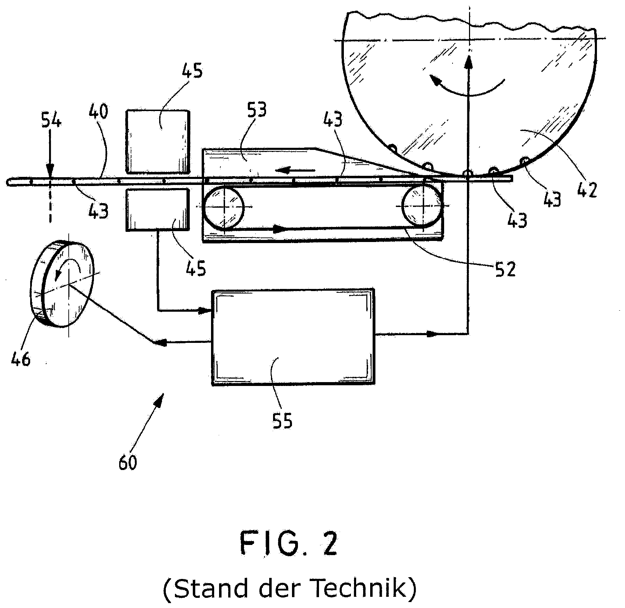

Bei idealer und fehlerfreier Produktion werden das Einlegerad 42 für die Kapseln 43, 44 sowie der Messerträger 46 in ihrer Winkellage einmal zueinander richtig eingestellt, so dass der Schnitt an der gewünschten Stelle relativ zu den Kapseln erfolgt. Durch Verschleiß eines Formatbandes, das beispielsweise auch in Fig. 2 dargestellt ist, kann es jedoch im Laufe der Produktion zu einem langsam einsetzenden Schlupf zwischen Filterstrang 40 und Formatband 52 kommen. Die Folge hiervon ist ein langsames systematisches Weglaufen der Kapseln relativ zur Schnittlage der Filter 41. Dieses Problem kann mit Hilfe des Messsystems dadurch gelöst werden, dass bei einem systematischen Weglaufen der Kapseln die Winkellage zwischen Einlegerad 52 und Messerträger 46 durch eine Schnittlageregelung bzw. Lageregelung 48 nachgeregelt wird, wobei das Antriebssystem einen Masterimpuls, den sogenannten DCP (Double Cigarette Pulse), für das Nachregeln der Position des Einlegerads 42 liefert.

In Fig. 2 ist eine andere Ausführungsform einer Filterstrangmaschine 60 gemäß EP 2 243 385 A2 schematisch dargestellt. Es sind entsprechend auch die Komponenten Einlegerad 42, Mikrowellenresonator 45 und die Schneidvorrichtung 46 dargestellt. Das Einlegerad 42 weist Mulden auf, in die in diesem Ausführungsbeispiel nur eine Kapsel 43 jeweils eingebracht ist. Dieses ist im Gegensatz zur Ausführungsform gemäß Fig. 1, in der jeweils Doppelmulden vorgesehen sind, in die die beiden verschiedenen oder gleichen Kapseln hintereinander eingelegt sind. Die Kapseln werden durch Saugluft, bis zur Übergabe im Strang 40 gehalten.

Anschließend an das Einlegerad 42 ist in Fig. 2 eine Formatvorrichtung 53 dargestellt, die unter anderem ein Formatband 52 aufweist. Eine Formatvorrichtung ist auch bei der Ausführungsform gemäß Fig. 1 vorhanden, allerdings dort nicht dargestellt.

Die Lageregelung geschieht in Abhängigkeit eines Positionsmesswertes der jeweils eingelegten Kapsel 43 in den Strang 40, der durch den Mikrowellenresonator 45 generiert wird und einem Lageregler 55 zugeführt wird. Der Lageregler 55 steuert bzw. regelt die Winkellage des Einlegerads 42 relativ zur Schneidvorrichtung 46, so dass immer die richtige Schnittposition 54 eingehalten werden kann, die in einem vorgegebenen Abstand zur eingebrachten Kapsel 43 liegt.

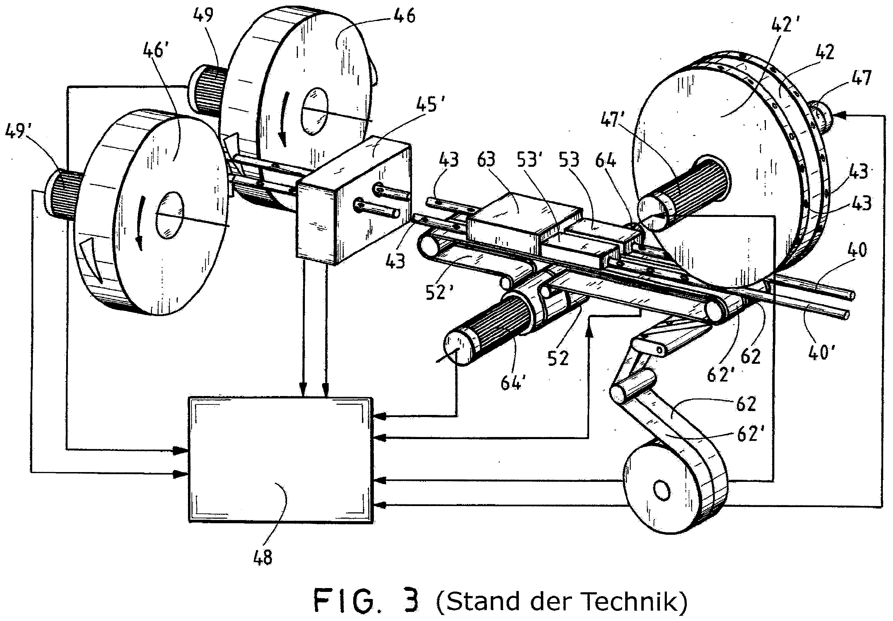

Fig. 3 zeigt schematisch und dreidimensional einen Teil einer weiteren bekannten Filterstrangmaschine gemäß EP 2 243 385 A2. Es ist eine Zweistrangmaschine dargestellt, also eine Filterstrangmaschine zur Verarbeitung von zwei Filtersträngen 40 und 40'. Entsprechend sind auch zwei Einlegeräder 42, 42' vorgesehen, die durch entsprechende Antriebssysteme 47, 47' jeweils angetrieben werden. Auch in diesem Fall dienen die Einlegeräder 42, 42' dazu, Kapseln 43 in die Filterstränge 40, 40' einzubringen.

Es ist zudem noch eine Bobine dargestellt, von der Umhüllungsmaterial 62, 62' nach einem Schneiden abgezogen wird. Das Umhüllungsmaterial 62, 62' wird zwei Formatbändern 52, 52' zugeführt. Die Formatbänder 52, 52' werden mittels Antriebssystemen 64, 64' angetrieben. Die Filterstränge 40, 40' werden auf die Formatbänder 52, 52' aufgelegt und durch Formatvorrichtungen 53, 53' geführt, in denen die Umhüllungsmaterialstreifen 62, 62' um die Filterstränge gewickelt werden und auch geschlossen werden.

Es schließt sich eine Nahtplättvorrichtung 63 an, in der insbesondere durch Wärmeeinwirkung die Umhüllungsmaterialstreifennähte bzw. der Kleber zum Verschließen der Nähte getrocknet werden. Anschließend gelangen die Stränge 40, 40' durch einen Mikrowellenresonator 45', der zwei Durchtrittsöffnungen für die Stränge 40, 40' aufweist. Der Mikrowellenresonator 45' kann eine Mikrowellenmessvorrichtung sein, die aus zwei Mikrowellenresonatoren besteht, die voneinander entkoppelt sind, um eine sehr gute Messgenauigkeit für den jeweiligen Strang zu ermöglichen. Hierdurch kann dann bei dem jeweiligen Strang ein erfindungsgemäßes Verfahren zum Überwachen der Qualität der Beschickung eines Filters oder eines jeweiligen Filterstrangs der Tabak verarbeitenden Industrie mit Kapseln, die eine flüssige Füllung aufweisen, durchgeführt werden.

Nach dem Mikrowellenresonator 45 bzw. der Mikrowellenresonatorvorrichtung schließen sich zwei Schneidvorrichtungen 46, 46' an, die jeweils durch Antriebssysteme 49 und 49' angetrieben werden.

Die Lageregelung der entsprechenden angetriebenen Komponenten, nämlich der Einlegeräder 42, 42', der Formatbänder 52 und 52' als auch der Schneidvorrichtung 46 und 46', wird über entsprechende mit den Komponenten verbundene Antriebssysteme 47, 47'; 64, 64' und 49, 49' durchgeführt. Die Lageregelung der Formatbänder 52 und 52' umfasst dabei eine überlagerte Geschwindigkeitsregelung.

Die Lageregelung 48 erhält von dem Mikrowellenresonator 45' die Lage der jeweiligen Kapseln 43 in den jeweiligen Strängen. Diese Lage wird weiterverarbeitet zu Steuergrößen, die zur Ansteuerung der Antriebssysteme dienen. Auf diese Weise kann die Lage, insbesondere Winkellage, der Schneidvorrichtungen 46, 46' geregelt oder gesteuert werden. Entsprechend kann auch die Winkellage der Schneidvorrichtungen 46, 46' relativ zu der Geschwindigkeit oder den Geschwindigkeiten der Formatbänder 52 und 52' gesteuert oder geregelt werden. Schließlich ist es möglich, die Winkellage der Einlegeräder 42, 42' relativ zur Geschwindigkeit der Formatbänder 52 und 52' zu steuern oder zu regeln.

Besonders bevorzugt ist es, wenn die Lage der in die Filterstränge 40, 40' eingebrachten Kapseln 43 so gesteuert bzw. geregelt wird, dass die Kapseln in Förderrichtung der Stränge 40, 40' immer im selben Abstand parallel in den beiden Strängen 40, 40' liegen. In diesem Fall können die Schneidvorrichtungen 46 und 46' zur gleichen Zeit die Stränge schneiden und es findet eine Synchronisation des Laufes der Filterstränge 40, 40' sowie der Weiterverarbeitung der abgelängten Filter statt. Auch kann für beide Stränge eine gemeinsame Schneidvorrichtung vorgesehen sein.

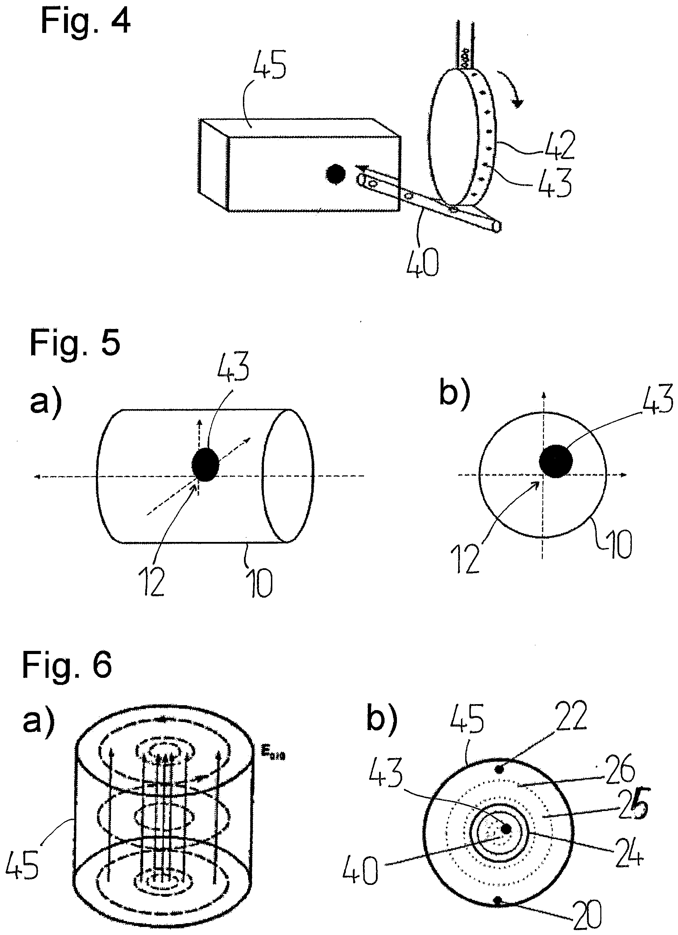

In Fig. 4 ist eine entsprechende bekannte Antwort noch einmal perspektivisch grob schematisch dargestellt. Ein Filterstrang 40, in den ein Einlegerad 42 flüssigkeitsgefüllte Kapseln 43 einlegt, die es aus einem Befüllungsschacht (ohne Bezugszeichen) erhält, wird auf einen Eingang eines schematisch dargestellten Mikrowellenresonators zu gefördert. Darin ist ein zylindrischer Resonator beispielsweise gemäß DE 198 54 550 B4 angeordnet, den der Filterstrang 40 zentral durchläuft.

In Fig. 5a) und 5b) ist der Fall dargestellt, dass eine Kapsel 43 nicht zentral in einem Abschnitt eines Filterstrangs bzw. in einem zylindrischen Filterstab 10 angeordnet ist. In Fig. 5a) ist diese Situation perspektivisch dargestellt, wobei eine zentrale Sollposition als Nullpunkt eines kartesischen Koordinatensystems dargestellt ist, dessen eine Achse durch die zentrale Symmetrieachse des zylindrischen Objekts verläuft und die beiden anderen senkrecht dazu. Ein Versatz der Kapsel 43 ist in Fig. 5a) bereits erkennbar.

In Fig. 5b) ist eine Draufsicht auf eine Endfläche des Filterstabs 10 gezeigt, der zeigt, dass die Kapsel 43 stark exzentrisch angeordnet ist und die Sollposition 12 nicht einmal berührt. Eine solche Fehlpositionierung sollte zum Ausschluss des Filterstabs 10 von der weiteren Produktion führen.

Fig. 6a), b) stellt die Gegebenheiten des resonanten Mikrowellenfelds in einem hohlzylindrischen Mikrowellenresonator 45 dar, wie er aus DE 198 54 550 B4 bekannt ist. Dieser wird in der E₀₁₀-Mode betrieben, so dass die größte Feldstärke im Zentrum herrscht. Hierbei bedeuten die durchgezogenen geraden Pfeile die E-Feldlinien (elektrische Feldlinien) und die geschlossenen gestrichelten Feldlinien die (magnetischen) H-Feldlinien.

In Fig. 6b) sind realistische Größenverhältnisse in einer Draufsicht auf eine Endfläche des zylindrischen Resonators dargestellt. So befinden sich Sender 20 und Empfänger 22 jeweils am Rand des zylindrischen Hohlraums des Mikrowellenresonators 45. Der größte Teil des Resonatorraums 25 ist leer. Es sind die H-Feldlinien des Mikrowellenfeldes 26 dargestellt. Zentral befindet sich ein Durchführungsloch mit einem den Resonatorraum 25 durchsetzenden Führungsrohr aus PEEK (Polyetheretherketon), in dem der mit Kapseln 43 besetzte Filterstrang 40 durch den Resonator gefördert wird. Im Zentrum ist das Mikrowellenmessfeld in radialer Richtung allerdings kaum anisotrop, so dass eine exzentrische Anordnung der Kapsel 43 kaum wahrgenommen wird bzw. von einer etwas geringeren Befüllung der Kapsel nicht unterscheidbar ist.

Demgegenüber ist in Fig. 7 ein offener Koaxialresonator 30 im Detail schematisch im Querschnitt dargestellt. Der offene Koaxialresonator 30 ist im Querschnitt zylindrisch und weist einen Boden 33 sowie einen zentralen Leiter 34 auf. Die Endfläche gegenüber dem Boden 33 ist offen mit einer Öffnung 35, aus der ein Mikrowellenmessfeld 32 austritt, das an der Stelle des Austritts des zentralen Leiters 35 besonders stark gebündelt ist. Die Stärke des Mikrowellenmessfeldes 32 nimmt mit zunehmender Entfernung von der Öffnung 35 stark ab. In Fig. 7 ist außerdem dargestellt, dass sich ein Filterstab 10 oder ein Filterstrang mit einer Kapsel 43 gerade zentral über der Öffnung 35 des Koaxialresonators 30 befindet und somit das Mikrowellenfeld 32 maximal durch die Anwesenheit der flüssigkeitsgefüllten Kapsel 43 beeinflusst wird.

In Fig. 8 ist der Frequenzverlauf der Amplitude A des resonanten Mikrowellenfeldes 32 in dem Resonator dargestellt. Die Resonanzkurve 36 stellt den Fall ohne anwesende Kapsel dar. Die Resonanzkurve 36' zeigt den Fall mit anwesender Kapsel 43. Es zeigt sich, dass das Resonanzmaximum um eine Resonanzverschiebung verschoben ist, die mit einem Doppelpfeil gekennzeichnet ist, und bei niedrigeren Frequenzen die Resonanzkurve 36' oberhalb der Resonanzkurve 36 liegt. Die tatsächlich verwendete Messfrequenz 39 liegt auf der unteren Flanke der Resonanzkurven 36, 36'.

Werden in dem Mikrowellenfeld die Position und Lage einer Kapsel 43 relativ zur Resonatoroberfläche und an einem bestimmten Messpunkt verändert, verändern sich in dem angeregten schwingenden System die Resonanzfrequenz und die Dämpfung und Güte gemäß Fig. 8. Beide Größen können analog, wie im bisherigen System, beispielsweise mittels Leistungs-Verlust-Amplitude und erster Ableitung an einer festgelegten Messfrequenz ermittelt und ausgewertet werden. Dabei kann eine Durchgangsmessung S₂₁ bzw. eine Reflektionsmessung S₁₁ verwendet werden. Auch eine Messung nach dem Resonanzfolgeverfahren, die insbesondere als Reflektionsmessung aufgebaut ist, ist erfindungsgemäß möglich. Ebenso ist es möglich, anhand der Messung der Breite der Resonanz die Güte des Resonators zu ermitteln, die bei leerem Resonator hoch ist und bei Vorhandensein eines Objekts sich verringert, was zu einer Verbreiterung der Resonanz führt, die in Fig. 8 zu beobachten ist.

In Fig. 9 ist die erste Hälfte der Amplitude A des so erzielten Signals 37 im zeitlichen Verlauf bei Annäherung einer Kapsel 43 an die Öffnung 35 eines Koaxialresonators 30 gezeigt, wobei die Steigerung des gemessenen Signals 37 bei der Messfrequenz 39 aus der Zunahme der Menge an Material, sowohl Acetat als auch Flüssigkeit in der Kapsel, kombiniert mit der Abnahme der Distanz resultiert. Den größten Einfluss hat hierbei das so genannte "High-Loss"-Material der Kapsel. Das Filtermaterial hat weniger Effekt auf das Messsignal. Je kleiner der Abstand von der Oberfläche des Resonators ist, desto größer ist der Signalausschlag und je größer die Menge, d.h. der Befüllungsgrad, ist, desto größer ist ebenfalls der Signalausschlag. Der zeitliche Verlauf entspricht bei konstanter Fördergeschwindigkeit einer Abhängigkeit des Signals von der Distanz zwischen Objekt und Resonator.

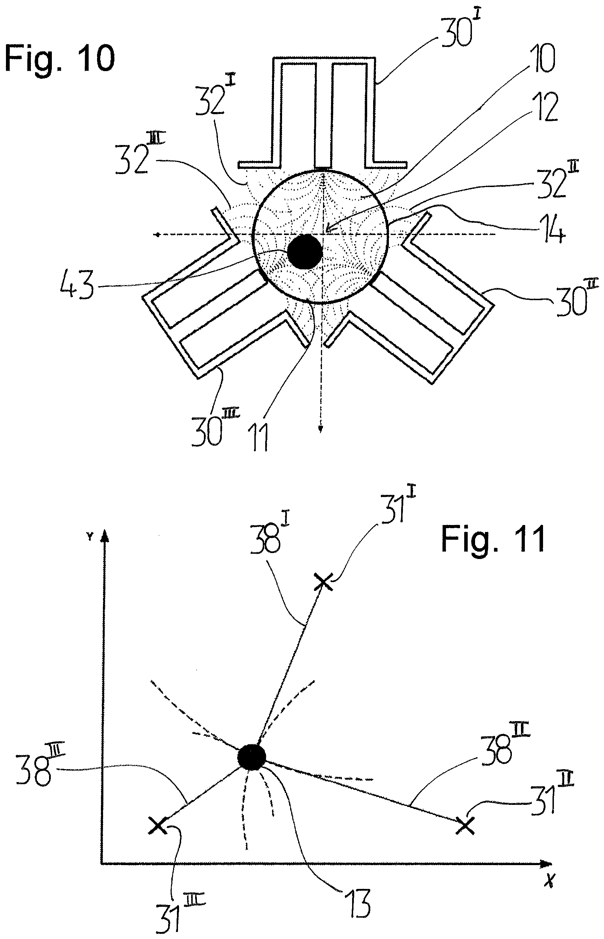

Fig. 10 zeigt eine erfindungsgemäße sternförmige Anordnung dreier offener Koaxialresonatoren 30^{I-III} in einer Querschnittsdarstellung, die um einen Filterstab 10 herum angeordnet sind. Die Anordnung gilt in gleicher Weise auch für den Fall, dass anstelle eines Filterstabs 10 ein endloser Filterstrang 40 mit Kapseln 43 überprüft wird. Die drei Mikrowellenresonatoren 30^{I-III} sind mit ihren jeweiligen Öffnungen zum Filterstab 10 hin ausgerichtet und unter Winkeln von 120° zueinander angeordnet, bilden also ein gleichseitiges Dreieck. Wie aus Fig. 10 ebenfalls ersichtlich ist, überlappen die Mikrowellenmessfelder 32^{I-III} einander teilweise. Daher werden verschiedene Messfrequenzen verwendet, um sie voneinander zu entkoppeln.

Das Objekt 43 ist stark exzentrisch, als von der zentralen Sollposition 12 entfernt und an den Rand 11 des Filterstabs 10 versetzt, angeordnet. Damit befindet sich die Kapsel 43 nahe am Eingang des Koaxialresonators 30^{III} und beeinflusst das Mikrowellenfeld 32^{III} sehr stark. Zudem ist es etwa gleich weit von den seitlichen Öffnungen der Koaxialresonatoren 30^{I} und 30" entfernt, so dass deren Mikrowellenfelder 32^{I} und 32^{II} nur vergleichsweise schwache Veränderungen erfahren. Das Ergebnis sind ein starkes Messsignal bei dem offenen Koaxialresonator 30^{III} und schwache Messsignale bei den Koaxialresonatoren 30^{I} und 30^{II}.

In Fig. 11 ist eine Triangulation aus den Messergebnissen gemäß Fig. 10 graphisch dargestellt. Mit den Kreuzen 31^{I-III} sind die Positionen der offenen Koaxialresonatoren 30^{I-III} gemäß Fig. 10 bezeichnet. Die von den Kreuzen ausgehenden Linien haben eine Länge, die einem gewichteten gemessenen jeweiligen Abstand 38^{I-III} entspricht. Da die Messsignale außer vom jeweiligen Abstand auch vom Befüllungszustand der Kapsel 43 abhängen, muss eine entsprechende Gewichtung erfolgen.

Die verschiedenen Messsignale erlauben zunächst eine Beurteilung der relativen Abstände der Kapsel 43 zu den drei Mikrowellenresonatoren 30^{I-III}, in der Form, dass die Verhältnisse der Abstände bekannt sind, aber nicht die Absolutwerte. Dann werden die Abstände mit den ermittelten festen Abstandsverhältnissen so lange variiert, bis sich die entsprechenden Kreise (vgl. gestrichelte Linien in Fig. 11) mit den entsprechenden Abständen um die Positionen 31^{I-III} herum in einem gemeinsamen Schnittpunkt schneiden. Der Schnittpunkt markiert die transversale Istposition 13 der Kapsel 43. Aus den Messsignalen lässt sich anschließend bei bekannter Istposition 13 der Kapsel 43 auf deren Befüllungszustand rückschließen. Hierzu werden die Messsignale beispielsweise abstandsgewichtet aufsummiert, wobei die Anisotropie der austretenden Mikrowellenmessfelder zu berücksichtigen ist.

Zusätzlich kann auch über die Laufrichtung und die zeitliche Komponente des Messsignals die Längsposition im Strang oder Artikel bestimmt werden, beispielsweise gemäß maximalem festgestelltem Füllungsgrad abhängig von der momentanen Strang- oder Artikelposition. Auch das Fehlen oder die Doppelung von Kapseln oder Objekten an Stellen, an denen ein Objekt eingelegt sein sollte, ist hiermit feststellbar ist.

### Bezugszeichenliste

- 10: Filterstab
- 11: Rand des Filterstabs
- 12: Sollposition
- 13: transversale Istposition
- 14: Führungsrohr
- 20: Sender
- 22: Empfänger
- 24: Führungsrohr
- 25: Resonatorraum
- 26: Mikrowellenfeld
- 30, 30^{I-III}: offener Koaxialresonator
- 31^{I-III}: Position eines offenen Koaxialresonators
- 32, 32^{I-III}: Mikrowellenmessfeld
- 33: Boden
- 34: zentraler Leiter
- 35: seitliche Öffnung
- 36, 36': Resonanzkurve
- 37: zeitlicher Verlauf eines Messsignals
- 38^{I-III}: gewichteter gemessener Abstand
- 39: Messfrequenz
- 40, 40': Filterstrang
- 41: abgelängter Filter zweifacher Gebrauchslänge
- 42, 42': Einlegerad
- 43: Kapsel
- 44: Kapsel
- 45, 45': Mikrowellenresonator
- 46, 46': Schneidvorrichtung
- 47, 47': Antriebssystem
- 48: Lageregelung
- 49, 49': Antriebssystem
- 50: Qualitätsüberwachung und Statistiksystem
- 51: Ausblasvorrichtung
- 52, 52': Formatband
- 53, 53': Formatvorrichtung
- 54: Schnittposition
- 55: Lageregler
- 56: Einlegeposition
- 57: Längsachse
- 60: Filterstrangmaschine
- 61: Filtertowstreifen
- 62, 62': Umhüllungsmaterialstreifen
- 63: Nahtplättvorrichtung
- 64, 64': Antriebssystem

## Patentansprüche

1. Messvorrichtung zur Überprüfung wenigstens eines längsaxial geförderten stabförmigen Artikels (10) oder Materialstrangs (40) der Tabak verarbeitenden Industrie zur Überprüfung einer Position (13) wenigstens eines in den Artikel (10) oder den Materialstrang (40) eingelegten Objekts (43, 44), insbesondere einer flüssigkeitsgefüllten Kapsel (43, 44), mittels wenigstens eines Mikrowellenmessfeldes (32^{I-III}), **dadurch gekennzeichnet, dass** wenigstens zwei, insbesondere wenigstens drei, Mikrowellenresonatoren (30^{I-III}) mit seitlichen Öffnungen (35) an in Umfangsrichtung des Artikels (10) oder Materialstrangs (40) unterschiedlichen Positionen (31^{I-III}) um den Artikel (10) oder den Materialstrang (40) herum angeordnet sind und den Artikel (10) oder Materialstrang (40) jeweils von einer Seite mit einem Mikrowellenmessfeld (32^{I-III}) beaufschlagen, wobei die wenigstens zwei Mikrowellenresonatoren (30^{I-III}) als offene Koaxialresonatoren (30^{I-III}) ausgebildet sind, wobei die offene Seite des Koaxialresonators (30^{I-III}) zum Artikel (10) oder Materialstrang (40) hin ausgerichtet ist, wobei eine mit den Mikrowellenresonatoren (30^{I-III}) verbundene Leistungselektronik ausgebildet ist, die Mikrowellenresonatoren (30^{I-III}) mit unterschiedlichen Mikrowellenmessfrequenzen zu beaufschlagen.

2. Messvorrichtung nach Anspruch 1, **dadurch gekennzeichnet, dass** drei Mikrowellenresonatoren (30^{I-III}) in einer gleichwinkligen, insbesondere sternförmigen, Anordnung um den Artikel (10) oder Materialstrang (40) herum angeordnet sind.

3. Messvorrichtung nach Anspruch 1 oder 2, **dadurch gekennzeichnet, dass** drei Mikrowellenresonatoren (30^{I-III}) an der gleichen Position oder an verschiedenen Positionen in längsaxialer Richtung des Artikels (10) oder Materialstrangs (40) angeordnet sind.

4. Messvorrichtung nach einem der Ansprüche 1 bis 3, **dadurch gekennzeichnet, dass** eine mit den Mikrowellenresonatoren (30^{I-III}) verbundene Leistungselektronik ausgebildet ist, die Mikrowellenresonatoren (30^{I-III}) mit Mikrowellenmessfrequenzen zwischen 1 GHz und 10 GHz, insbesondere zwischen 4 GHz und 7 GHz, zu beaufschlagen.

5. Messvorrichtung nach einem der Ansprüche 1 bis 4, **dadurch gekennzeichnet, dass** die Mikrowellenresonatoren (30^{I-III}), insbesondere offene Koaxialresonatoren (30^{I-III}), für verschiedene Mikrowellenmessfrequenzen unterschiedliche Längen und/oder Formen bei gleichem Durchmesser aufweisen.

6. Messvorrichtung nach einem der Ansprüche 1 bis 5, **dadurch gekennzeichnet, dass** eine Führungsvorrichtung (14) zur Führung des Artikels (10) oder des Materialstrangs (40) im Bereich der Mikrowellenresonatoren (30^{I-III}) vorgesehen ist, mittels der ein Abstand zwischen dem Artikel (10) oder Materialstrang (40) und den Öffnungen (35) der Mikrowellenresonatoren (30^{I-III}) vorgebbar ist.

7. Verwendung einer Messvorrichtung nach einem der Ansprüche 1 bis 6 zur Überprüfung wenigstens eines längsaxial geförderten stabförmigen Artikels (10) oder Materialstrangs (40) der Tabak verarbeitenden Industrie zur Überprüfung einer Position (13) wenigstens eines in den Artikel (10) oder den Materialstrang (40) eingelegten Objekts (43, 44), insbesondere einer flüssigkeitsgefüllten Kapsel (43, 44), insbesondere einer transversalen Position (13) des Objekts (43, 44) im Artikel (10) oder Materialstrang (40) und/oder eines radialen Abstands des Objekts von einem Mittelpunkt und/oder von einem Rand (11) des Artikels (10) oder Materialstrangs (40).

8. Maschine der Tabak verarbeitenden Industrie, insbesondere Filterstrangmaschine oder Zigarettenstrangmaschine, mit wenigstens einer Messvorrichtung nach einem der Ansprüche 1 bis 6 zur Überprüfung von längsaxial geförderten Artikeln oder ein oder zwei Materialsträngen, insbesondere Filtersträngen, oder umhüllten Tabaksträngen oder Zigarettensträngen.

9. Verfahren zur Überprüfung wenigstens eines längsaxial geförderten stabförmigen Artikels (10) oder Materialstrangs (40) der Tabak verarbeitenden Industrie, in den wenigstens ein Objekt (43, 44), insbesondere eine flüssigkeitsgefüllte Kapsel (43, 44), eingelegt ist, mittels wenigstens eines Mikrowellenmessfeldes (32, 32^{I-III}), in einer Messvorrichtung nach einem der Ansprüche 1 bis 6, **dadurch gekennzeichnet, dass** der Artikel (10) oder der Materialstrang (40) während einer längsaxialen Förderung von drei in Umfangsrichtung unterschiedlichen Seiten mit jeweils einem von einer Seite radial eindringenden Mikrowellenmessfeld (32^{I-III}) aus jeweils wenigstens einem seitlich offenen Mikrowellenresonator (30^{I-III}) beaufschlagt wird, wobei aus den aus der Anwesenheit eines in den Artikel (10) oder Materialstrang (40) eingelegten Objekts (43, 44) resultierenden Änderungen der jeweiligen Messsignale (37) der drei Mikrowellenresonatoren (30^{I-III}) wenigstens eine Eigenschaft des Objekts (43, 44) ermittelt wird, wobei die drei Mikrowellenresonatoren (30^{I-III}) als offene Koaxialresonatoren (30^{I-III}) ausgebildet sind, wobei die offene Seite des Koaxialresonators (30^{I-III}) zum Artikel (10) oder Materialstrang (40) hin ausgerichtet ist und wobei eine ermittelte Eigenschaft eine transversale Position (13) des Objekts im Artikel (10) oder Materialstrang (40) und/oder ein radialer Abstand des Objekts (43, 44) von einem Mittelpunkt und/oder von einem Rand (11) des Artikels (10) oder Materialstrangs (40) ist und/oder eine längsaxiale Position des Objekts (43, 44) im Artikel (10) oder Materialstrang (40) ist.

10. Verfahren nach Anspruch 9, **dadurch gekennzeichnet, dass** eine ermittelte Eigenschaft eine Füllmenge, ein Füllungsgrad, ein Beschädigungszustand und/oder ein Fehlen eines Objekts (43, 44) ist oder ein Überschuss an eingelegten Objekten (43, 44) an einer längsaxialen Position im Artikel (10) oder Materialstrang (40).

11. Verfahren nach Anspruch 9 oder 10, **dadurch gekennzeichnet, dass** die Ermittlung mittels einer Triangulation und/oder einer Look-Up-Tabelle erfolgt, die insbesondere simulativ oder empirisch bestimmt ist oder wird.

12. Verfahren nach einem der Ansprüche 9 bis 11, **dadurch gekennzeichnet, dass** ein Artikel (10) oder ein Abschnitt des Materialstrangs (40), der ein Objekt (43, 44) enthält, das wenigstens einen vorbestimmten oder vorbestimmbaren Grenzwert für die wenigstens eine ermittelte Eigenschaft nicht einhält, von der weiteren Verarbeitung ausgeschlossen und/oder aus dem Herstellungsprozess ausgeschleust, insbesondere ausgeblasen, wird.

13. Verfahren nach einem der Ansprüche 9 bis 12, **dadurch gekennzeichnet, dass** in einem selbstlernenden System Grenzwerte für ordnungsgemäße Objekte (43, 44) für eine Produktion, insbesondere für jede Produktion, angepasst werden, wobei insbesondere für die ersten, insbesondere 10 bis 50, Objekte (43, 44) im Materialstrang oder in den Artikeln ein vorläufiger erster Bereich für Grenzwerte festgelegt wird und anschließend ein laufendes Mittel über mehrere, insbesondere 500 bis 1.000, Objekte (43, 44) im Materialstrang oder in den Artikeln zur Anpassung der Grenzwerte verwendet wird.

## Claims

1. Measuring device for checking at least one longitudinal-axially conveyed rod-shaped article (10) or strand of material (40) of the tobacco-processing industry for checking a position (13) of at least one object (43, 44) inserted into the article (10) or the strand of material (40), in particular of a liquid-filled capsule (43, 44), by means of at least one microwave measuring field (32^{I-III}), **characterized in that** at least two, in particular at least three, microwave resonators (30^{I-III}) having lateral openings (35) at different positions (31^{I-III}) in the circumferential direction of the article (10) or strand of material (40) are arranged around the article (10) or the strand of material (40) and apply a microwave measuring field (32^{I-III}) to the article (10) or strand of material (40) in each case from one side, wherein the at least two microwave resonators (30^{I-III}) are designed as open coaxial resonators (30^{I-III}), wherein the open side of the coaxial resonator (30^{I-III}) is orientated toward the article (10) or strand of material (40), wherein power electronics connected to the microwave resonators (30^{I-III}) are designed to apply different microwave measuring frequencies to the microwave resonators (30^{I-III}) .

2. Measuring device according to Claim 1, **characterized in that** three microwave resonators (30^{I-III}) are arranged in an equiangular, in particular star-shaped, arrangement around the article (10) or strand of material (40).

3. Measuring device according to Claim 1 or 2, **characterized in that** three microwave resonators (30^{I-III}) are arranged at the same position or at different positions in the longitudinal-axial direction of the article (10) or strand of material (40).

4. Measuring device according to one of Claims 1 to 3, **characterized in that** power electronics connected to the microwave resonators (30^{I-III}) are designed to apply microwave measuring frequencies between 1 GHz and 10 GHz, in particular between 4 GHz and 7 GHz, to the microwave resonators (30^{I-III}) .

5. Measuring device according to one of Claims 1 to 4, **characterized in that** the microwave resonators (30^{I-III}), in particular open coaxial resonators (30^{I-III}), have, for different microwave measuring frequencies, varying lengths and/or shapes while having the same diameter.

6. Measuring device according to one of Claims 1 to 5, **characterized in that** a guide device (14) for guiding the article (10) or the strand of material (40) is provided in the area of the microwave resonators (30^{I-III}), by means of which it is possible to pre-set a distance between the article (10) or material strand (40) and the openings (35) of the microwave resonators (30^{I-III}).

7. Use of a measuring device according to one of Claims 1 to 6 for checking at least one longitudinal-axially conveyed rod-shaped article (10) or material strand (40) of the tobacco-processing industry for checking a position (13) of at least one object (43, 44) inserted into the article (10) or the material strand (40), in particular of a liquid-filled capsule (43, 44), in particular a transverse position (13) of the object (43, 44) in the article (10) or material strand (40) and/or a radial distance of the object from a mid-point and/or from an edge (11) of the article (10) or material strand (40).

8. Machine of the tobacco-processing industry, in particular filter strand machine or cigarette strand machine, with at least one measuring device according to one of Claims 1 to 6 for checking longitudinal-axially conveyed articles or one or two material strands, in particular filter strands, or wrapped tobacco strands or cigarette strands.

9. Method for checking at least one longitudinal-axially conveyed rod-shaped article (10) or material strand (40) of the tobacco- processing industry, into which at least one object (43, 44), in particular a liquid-filled capsule (43, 44), is inserted, by means of at least one microwave measuring field (32, 32^{I-III}), in a measuring device according to one of Claims 1 to 6, **characterized in that** the article (10) or the material strand (40), during longitudinal-axial conveying, is acted upon from three circumferentially different sides with, in each case, one microwave measuring field (32^{I-III}) radially penetrating from one side, coming from, in each case, at least one laterally open microwave resonator (30^{I-III}), wherein, from the changes, in the respective measuring signals (37) of the three microwave resonators (30^{I-III}), resulting from the presence of an object (43, 44) inserted into the article (10) or material strand (40), at least one property of the object (43, 44) is determined, wherein the three microwave resonators (30^{I-III}) are designed as open coaxial resonators (30^{I-III}), wherein the open side of the coaxial resonator (30^{I-III}) is oriented toward the article (10) or material strand (40) and wherein a determined feature is a transverse position (13) of the object in the article (10) or material strand (40) and/or a radial distance of the object (43, 44) from a mid-point and/or from an edge (11) of the article (10) or material strand (40) and/or a longitudinal-axial position of the object (43, 44) in the article (10) or material strand (40).

10. Method according to Claim 9, **characterized in that** a determined property is a filling amount, a filling degree, a damage state and/or an absence of an object (43, 44) or a surplus of inserted objects (43, 44) at a longitudinal-axial position in the article (10) or material strand (40).

11. Method according to Claim 9 or 10, **characterized in that** the determination is carried out by means of a triangulation and/or a look-up table, which is or will be determined in particular simulatively or empirically.

12. Method according to one of Claims 9 to 11, **characterized in that** an article (10) or a portion of the material strand (40) that contains an object (43, 44), which does not meet at least one predetermined or predeterminable limit value for the at least one determined property, is excluded from further processing and/or removed, in particular blown out, from the manufacturing process.

13. Method according to one of Claims 9 to 12, **characterized in that**, in a self-learning system, limit values for objects (43, 44) in accordance with specification are adjusted for a production, in particular for each production, wherein, in particular for the first, in particular 10 to 50, objects (43, 44) in the material strand or in the articles, a provisional first range for limit values is established and then a moving average over many, in particular 500 to 1000, objects (43, 44) in the material strand or in the articles is used to adjust the limit values.

## Revendications

1. Dispositif de mesure pour le contrôle d'au moins un article (10) ayant la forme d'une tige ou d'un boudin de matière (40), transporté dans le sens de l'axe longitudinal, de l'industrie de traitement du tabac, pour contrôler une position (13) d'au moins un objet (43, 44) inséré dans l'article (10) ou le boudin de matière (40), notamment d'une capsule (43, 44) remplie d'un liquide, à l'aide d'au moins un champ de mesure à micro-ondes (32^{I-III}), **caractérisé en ce qu'**au moins deux, notamment au moins trois, résonateurs à micro-ondes (30^{I-III}) avec des ouvertures latérales (35) sont disposés dans des positions différentes (31^{I-III}), dans le sens de pourtour de l'article (10) ou du boudin de matière (40), autour de l'article (10) ou du boudin de matière (40) et appliquent chacun à l'article (10) ou au boudin de matière (40), à partir d'un côté, un champ de mesure à micro-ondes (32^{I-III}), lesdits au moins deux résonateurs à micro-ondes (30^{I-III}) étant configurés comme résonateurs coaxiaux (30^{I-III}) ouverts, le côté ouvert des résonateurs coaxiaux (30 ^{I-III}) étant orienté vers l'article (10) ou le boudin de matière (40), une électronique de puissance reliée aux résonateurs à micro-ondes (30^{I-III}) étant configurée pour appliquer aux résonateurs à micro-ondes (30^{I-III}) des fréquences de mesure micro-ondes différentes.

2. Dispositif de mesure selon la revendication 1, **caractérisé en ce que** trois résonateurs à micro-ondes (30 ^{I-III}) sont disposés dans une disposition à des angles égaux, notamment en forme d'étoile, autour de l'article (10) ou du boudin de matière (40).

3. Dispositif de mesure selon la revendication 1 ou 2, **caractérisé en ce que** trois résonateurs à micro-ondes (30^{I-III}) sont disposés dans la même position ou dans des positions différentes, dans la direction de l'axe longitudinal de l'article (10) ou du boudin de matière (40).

4. Dispositif de mesure selon l'une des revendications 1 à 3, **caractérisé en ce qu'**une électronique de puissance reliée aux résonateurs à micro-ondes (30^{I-III}) est configurée pour appliquer aux résonateurs à micro-ondes (30^{I-III}) des fréquences de mesure micro-ondes entre 1 GHz et 10 GHz, notamment entre 4 GHz et 7 GHz.

5. Dispositif de mesure selon l'une des revendications 1 à 4, **caractérisé en ce que** les résonateurs à micro-ondes (30^{I-III}), notamment des résonateurs coaxiaux (30^{I-III}) ouverts, présentent, pour un même diamètre, des longueurs et/ou formes différentes pour des fréquences de mesure micro-ondes différentes.

6. Dispositif de mesure selon l'une des revendications 1 à 5, **caractérisé en ce qu'**un dispositif de guidage (14) pour guider l'article (10) ou le boudin de matière (40) est prévu dans la zone des résonateurs à micro-ondes (30^{I-III}), à l'aide duquel une distance entre l'article (10) ou le boudin de matière (40) et les ouvertures (35) des résonateurs à micro-ondes (30^{I-III}) peut être prédéterminée.

7. Utilisation d'un dispositif de mesure selon l'une des revendications 1 à 6 pour contrôler au moins un article (10) ayant la forme d'une tige ou d'un boudin de matière (40), transporté dans le sens de l'axe longitudinal, de l'industrie de traitement du tabac, pour contrôler une position (13) d'au moins un objet (43, 44) inséré dans l'article (10) ou le boudin de matière (40), notamment d'une capsule (43, 44) remplie d'un liquide, notamment d'une position transversale (13) de l'objet (43, 44) dans l'article (10) ou boudin de matière (40) et/ou d'une distance radiale de l'objet d'un centre et/ou d'un bord (11) de l'article (10) ou boudin de matière (40).

8. Machine de l'industrie de traitement du tabac, notamment machine pour boudins de filtre ou machine pour boudins de cigarettes, avec au moins un dispositif de mesure selon l'une des revendications 1 à 6 pour contrôler des articles ou un ou deux boudins de matière, notamment des boudins de filtre, ou des boudins de tabac ou de cigarette enveloppés.

9. Procédé pour le contrôle d'au moins un article (10) ayant la forme d'une tige ou d'un boudin de matière (40), transporté dans le sens de l'axe longitudinal, de l'industrie de traitement du tabac, dans lequel est inséré au moins un objet (43, 44), notamment une capsule (43, 44) remplie d'un liquide, à l'aide d'un champ de mesure à micro-ondes (32, 32^{I-III}) dans un dispositif de mesure selon l'une des revendications 1 à 6, **caractérisé en ce que**, pendant un transport dans la direction de l'axe longitudinal, de trois côtés différents, dans le sens du pourtour, un champ de mesure à micro-ondes (32^{I-III}) respectif pénétrant radialement d'un côté et provenant chacun d'au moins un résonateur à micro-ondes (30^{I-III}) latéralement ouvert, est appliqué à l'article (10) ou au boudin de matière (40), où sur la base des changements des signaux de mesure (37) respectifs des trois résonateurs à micro-ondes (30^{I-III}), qui résultent de la présence d'un objet (43, 44) inséré dans l'article (10) ou le boudin de matière (40), au moins une caractéristique de l'objet (43, 44) est déterminée, les trois résonateurs à micro-ondes (30^{I-III}) étant configurés comme résonateurs coaxiaux (30^{I-III}) ouverts, le côté ouvert du résonateur coaxial (30^{I-III}) étant orienté vers l'article (10) ou le boudin de matière (40), et la caractéristique déterminée étant une position transversale (13) de l'objet dans l'article (10) ou boudin de matière (40) et/ou une distance radiale de l'objet (43, 44) d'un centre et/ou d'un bord (11) de l'article (10) ou boudin de matière (40) et/ou une position de l'objet (43, 44) dans la direction de l'axe longitudinal dans l'article (10) ou le boudin de matière (40).

10. Procédé selon la revendication 9, **caractérisé en ce qu'**une caractéristique déterminée est une quantité de remplissage, un taux de remplissage, un état d'endommagement et/ou une absence d'un objet (43, 44) ou un surplus d'objets (43, 44) insérés dans une position dans la direction de l'axe longitudinal dans l'article (10) ou le boudin de matière (40).

11. Procédé selon la revendication 9 ou 10, **caractérisé en ce que** la détermination est mise en oeuvre à l'aide d'une triangulation et/ou d'une table de recherche qui est ou a été déterminée par simulation ou de manière empirique.

12. Procédé selon l'une des revendications 9 à 11, **caractérisé en ce qu'**un article (10) ou une section d'un boudin de matière (40) qui contient un objet (43, 44) ne respectant pas une valeur limite prédéterminée ou pouvant être prédéterminée, est exclu de la suite du traitement et/ou est sorti du procédé de fabrication, notamment par soufflage.

13. Procédé selon l'une des revendications 9 à 12, **caractérisé en ce que** dans un système auto-apprenant, des valeurs limites pour des objets (43, 44) réglementaires sont adaptées pour une production, notamment pour chaque production, pour les premiers objets (43, 44), notamment dix à cinquante, dans le boudin de matière ou dans les articles, une première plage est fixée pour des valeurs limites et ensuite, une moyenne courante sur plusieurs objets (43, 44), notamment cinq cents à mille objets, dans le boudin de matière ou dans les articles est utilisée pour l'adaptation des valeurs limites.
